# EUROPEAN PATENT APPLICATION

(11) **EP 1 647 187 A1**
(43) Date of publication of application: **19.04.2006**
(21) Application number: 04738317.9
(22) Date of filing: 02.07.2004
(51) Int. Cl.: A01N 43/54

(54) **HERBICIDE MIXTURES OF PYRIBAMBENZ-PROPYL OR PYRIBAMBENZ-ISOPORYL WITH OTHER HERBIBIDES**

(30) Priority: 04.07.2003 CN 03141413; 13.08.2003 CN 03154061
(71) Applicant: Zhejiang Chem- Tech Group Co., Ltd, Zheijiang 310023 (CN); SHANGHAI INSTITUTE OF ORGANIC CHEMISTRY, CHINESE ACADEMY OF SCIENCES, Shanghai 200032 (CN)
(72) Inventor: CHEN, Jie, Hangzhou, Zhejiang 310023 (CN); LU, Long, Shanghai 200032 (CN); YUAN, Jun, Hangzhou, Zhejiang 310023 (CN); XU, Xiaoyan, Hangzhou, Zhejiang 310023 (CN); LING, Wen, Shanghai 200032 (CN); MAO, Lisheng, Shanghai 200032 (CN); WANG, Yonghua, Hangzhou, Zhejiang 310023 (CN)
(74) Representative: Behnisch, Werner
(86) International application number: PCT/CN2004/000719
(87) International publication number: WO 2005/002338

(57) **Abstract**

The present invention relates to a herbicidal composition, especially used as a rape field herbicide, prepared by mixing pyrimidinyl benzylamine herbicide (Pyribambenz-propyl or Pyribambenz-isopropyl) with at least one rape field herbicide selected from a group consisting of: acetyl-CoA carboxylase (ACCase) inhibitors including quizalofop-ethyl, fluazifop-p-butyl, haloxyfop, fenoxaprop, and sethoxydim; chloro-amido herbicides including acetochlor, alachlor, napropamide, ehaprochlor, and metolachlor; ethametsulfuron; and benazolin The composition of the present invention is of synergistic effect, reduced dosage, broadened spectrum of weed control, delayed resistance and increased safety toward rape .

## Description

### Technical Field

The present invention relates to an agricultural herbicidal composition, more particularly, to a composition for weed control formulated by mixing a pyrimidinyl benzylamine herbicide (Pyribambenz-propyl or Pyribambenz-isopropyl) with at least one herbicide selected from a group consistingzai of: acetyl-CoA carboxylase (ACCase) inhibitors including but not limited to quizalofop-ethyl, fluazifop-p-butyl, haloxyfop, fenoxaprop, and sethoxydim; chloroamide herbicides including acetochlor, alachlor, napropamide, ehaprochlor, and metolachlor; ethametsulfuron; and benazolin.

### Background of the Invention

Agricultural chemicals are the indispensable productive materials for human to obtain provisions and stably produce grain mass with good harvest. In recent hundred years, agricultural chemicals such as insecticides, bactericides, herbicides and the like made a great contribution to human beings. Recently, as the population of the world continues growing, the need of people to provisions is continuously increasing. However, the increasing rate of plowland can not be kept with the growing rate of population. In order to solve the cosmopolitan problem, we must rely on increasing crop yield per unit area and improving the quality of crops. Hence, it is necessary to apply various means such as breeding, arable farming, fertilizing and the like. Of those, the use of agricultural chemicals is an essential one of these means. However, it should also be seen that while agricultural chemicals made a great contribution to human civilization, high toxic, high residual agricultural chemicals also bring along negative effect on the environment which human beings rely on because of the knowledge limitation of human to agricultural chemicals. It is the direction of developing new agricultural chemicals to develop high efficient, low toxic, degradable, safe and environmental friendly agricultural chemicals to replace low efficient, high toxic, high residual and high resistant ones.

Pyribambenz-propyl and Pyribambenz-isopropyl belong to 2-pyrimidinyloxy-N-aryl-benzylamine herbicide. To develop the combination formulation of Pyribambenz-propyl and Pyribambenz-isopropyl in order to broaden the weed spectrum, improve the activity, delay the resistance, decrease the cost and the like is the most effective means to realize their application value.

China has been a large rape production country in the world. At the present the planting area and total production accounts for 1/3 of that in the world. China is the largest rape production country. The Yangtse River valley is the largest rape production region. The rape output area accounts for 1/4 of that in the world. Along with agricultural industrial structure transformation in China, especially in the Yangtse River valley, the planting area of wheat is decreasing, while the area of planting commerical crops like rape increasing year after year. Agronomists predict that the planting areas for rape will become 8,000,000 hectares in the future.

In Yangste River valley, 46.9% winter rape field suffers from weeds attack. That accounts to 10~20% lost of production in regular years, and up to 50% in severe crop smothering. It has become the important issue of quality and yield of rape. In rape field, *Alopecurus aequalis* and *Alopecurus japonicus* are the major grasses; *Stellaria aquatica, Stallaria media* and *Atellaria alsine* are the major broadleaf weeds. In China, the herbicides used most for rape field are as follows: haloxyfop-R, quizalofop-ethyl, fluazifop-p-butyl, sethoxydim, benazolin-ethyl, acetochlor and ethametsulfuron. Among these, some herbicides have narrow spectrum of weed control, either partial grasses or broadleaf weeds, such as, for example, haloxyfop-R, quizalofop-ethyl and benazolin. Some are long residual herbicides, which easily bring adverse effect to rotational crops, such as ethametsulfuron.

Pyribambenz-propyl and Pyribambenz-isopropyl have good selectivity between rape and weeds. It is of effective weed control towards *Alopecurus aequalis, Alopecurus japonicus, Stellaria aquatica, Stallaria media* and *Atellaria alsine* and of safety toward rape. Therefore they are a new class of herbicide with safety, activity and enormous application prospect. However, using herbicides in a long term in the production leads to great changes in the weed community. In some areas, there are increasing amount of high herbicidal-resistant grasses, such as *Beckmannia syzigachne, sclerochloa kengiana, Poa annua,* and some broadleaf weeds such as *Galium aparine, Lapsana apogonoides* and *Cardlamine hirsute* destroy more seriously than ever. Therefore, to develop the combination preparations of Pyribambenz-propyl or Pyribambenz-isopropyl to broaden their spectrum of weeds control, increase weed control activity, delay resistance to herbicides and decrease cost of usage is the most effective way to realize their application value.

The preparations of Pyribambenz-propyl or Pyribambenz-isopropyl are described in China Invention Patent Application No.00130735.5 and International patent application WO 02/34724A1. Their chemical names and structural formulae are as follows, respectively:

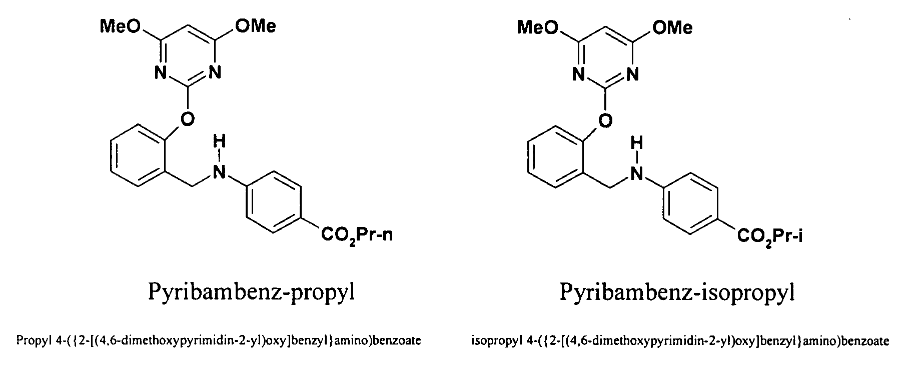

### Summary of the Invention

The present invention relates to a chemical herbicidal composition, more particularly, to a herbicidal composition for weed control formulated from a pyrimidinyl benzylamine herbicide (Pyribambenz-propyl or Pyribambenz-isopropyl) and at least one herbicide selected from a group consisting of acetyl-CoA carboxylase (ACCase) inhibitors, chloroamide herbicides, ethametsulfuron, and benazolin, as well as the use of the same.

### Detailed Description of the Invention

The objective of the present invention is to provide a herbicidal composition capable of broadening the weed spectrum of control, increasing the activity, delaying the resistance, and lowering the cost.

The present invention provides a herbicidal composition, in particular, a rape field herbicidal composition, which contains a pyrimidinyl benzylamine herbicide (Pyribambenz-propyl or Pyribambenz-isopropyl) and at least one herbicide selected from a group consisting of acetyl-CoA carboxylase (ACCase) inhibitors, chloroamide herbicides, ethametsulfuron, and benazolin (trade name: Galtak).

The acetyl-CoA carboxylase (ACCase) inhibitor is preferably selected from a group consisting of quizalofop-ethyl, fluazifop-p-butyl, haloxyfop, fenoxaprop, and sethoxydim. The chloroamide herbicide is preferably selected from a group consisting of acetochlor, alachlor, napropamide, ehaprochlor, and metolachlor. The pyrimidinyl benzylamine herbicide is selected from a group consisting of Pyribambenz-propyl and Pyribambenz-isopropyl. The Pyribambenz-propyl is propyl 4-({2-[(4,6-dimethoxypyrimidin-2-yl)oxy]benzyl}amino)benzoate and the Pyribambenz-isopropyl is iso-propyl 4-({2-[(4,6-dimethoxypyrimidin-2-yl)oxy]benzyl}amino)benzoate. Their structures are as follows:

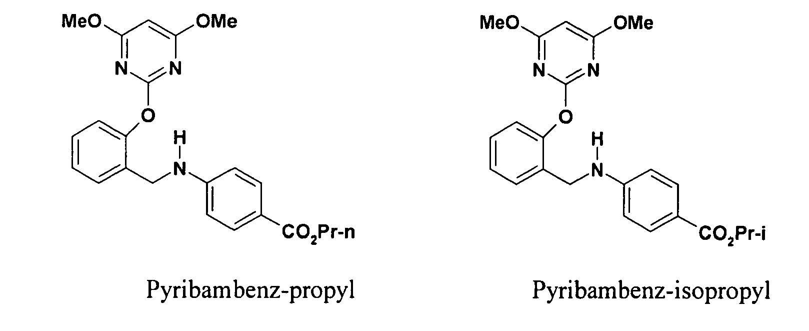

The recommended composition of the present invention comprising a pyrimidinyl benzylamine herbicide (Pyribambenz-propyl or Pyribambenz-isopropyl) and any one or two herbicide(s) selected from a group consisting of acetyl-CoA carboxylase (ACCase) inhibitors, chloroamide herbicides, ethametsulfuron, and benazolin (trade name: Galtak). The pyrimidinyl benzylamine herbicide, acetyl-CoA carboxylase (ACCase) inhibitors, chloroamide herbicides are as described previously.

Preferably, the above composition of the present invention is a rape field herbicide composition.

The quantity of the active ingredient in the composition of the present invention is relied on the dosage of individual compound upon single use. It also relies on the ratio of one compound to another and the synergistic effect. Wherein, the recommended ratio of the pyrimidinyl benzylamine herbicide to ACCase inhibitors is 1:0.01 ~ 10.0, preferably 1:0.01~5.0, especially 1:0.1~2.0 by weight based on the weight of the active ingredients; the ratio of the pyrimidinyl benzylamine herbicide to ethametsulfuron is preferably 1: 0.01~10.0, more preferably 1: 0.01~5.0, especially 1:0.1~0.5 by weight based on the weight of the active ingredients; the ratio of the pyrimidinyl benzylamine herbicide to benazolin (trade name, Galtak) is preferably 1: 1.0~20.0, more preferably 1: 1.0~10.0, and even more preferably 1: 5.0~10.0 by weight based on the weight of the active ingredients; and the ratio of the pyrimidinyl benzylamine herbicide to chloroamide herbicides is preferably 1:1~40, more preferably 1:5~20 by weight based on the weight of the active ingredients.

In the ternary combination preparation of the present invention, the recommended ratio of the pyrimidinyl benzylamine herbicide : ACCase inhibitor : ethametsulfuron = 1: 0.01~10 : 0.01~10.0, further recommended to be 1: 0.01~5.0 : 0.01~5.0, especially when the pyrimidinyl benzylamine herbicide : quizalofop-ethyl : ethametsulfuron 1 : 0.1~ 2.0 : 0.1~0.5 by weight based on the weight of the active ingredients; the ratio of pyrimidinyl benzylamine herbicide : ACCase inhibitors : benazolin is preferably 1 : 0.01~10.0 : 1.0~20.0, more preferably 1 : 0.01~5.0 : 1.0~10.0, especially preferably 1 : 0.1~2.0 : 5.0~10.0 by weight based on the weight of the active ingredients. In the ternary formulation, the ratio of pyrimidinyl benzylamine herbicides : chloroamide herbicides : benazolin is 1 : 1.0~40.0 : 1.0~20.0, more preferably 1 : 1.0~20.0 : 1.0~10.0, especially 1 : 2.0~10.0 : 5.0~10.0 by weight based on the weight of the active ingredient.

The composition of the present invention also may further comprise herbicide-acceptable carriers. The recommended total weight percent of active ingredients is 5% ~ 95%, preferably 10% ~ 90%. The carriers can be solid or liquid. Usually any common carrier used for herbicidal composition can be used. The composition of the present invention can be formulated into liquors, emulsifiable concentrate, suspension, aqueous suspension concentrate, micro-emulsion, emulsion (especially emulsion-in-water), powder, wettable powder, soluble powder, dispersible granule (especially water dispersible granule), or capsules and so on.

The preparations can be prepared by common means, such as mixing the active ingredient with liquid solvent and/or solid carriers, meanwhile adding various surfactants, for example, emulsifier, dispersant, stabilizer and humectant, and also other adjuvants such as binder, defoamer, oxidant, thickener, compatibility agents, anti-freezing additives and so on. Therefore, the present invention also includes the means to prepare above herbicidal compositions.

Liquid carriers include water and/or organic solvent. Organic solvent can be used for adjuvant or anti-freezing additive when water is used as solvent or diluent. The appropriate organic solvents include but not limited to: aromatic hydrocarbons, for instance benzene, xylene, toluene, alkyl benzene, alkyl naphthalene and chloroarene; chloro-aliphatic hydrocarbon, such as vinyl chloride, chloroform, dichloromethane, tatrachloromethane and polychloroethane; aliphatic hydrocarbons such as petroleum fraction, cyclohexane, light mineral oil and paraffin; polar solvents as the most suitable ones, i.e., alcohols such as isopropanol, butanol, ethylene glycol, propylene glycol, glycerol, sorbitol, benzoyl alcohol, sugar alcohols, cyclohexanol and the like; and their ethers and esters; and ketones, such as acetone, methyl ethyl ketone, methyl isobutyl ketone, cyclohexanone, dimethyl formamide, dimethylsulphoxide and N-methyl-pyrrolidone. Vegetable oils and methyl cellulose are also suitable. To use a liquid mixture of solvents is usually applicable.

The appropriate solid carriers include natural or synthesized clay and silicate, such as natural silica and diatomite; magnesium silicate such as talc; magnesium aluminum silicate such as kaolinite, kaoline, montmorillonoid and mica; white carbon black, calcium carbonate, light calcium carbonate; calcium sulphate; limestone; sodium sulphate; ammonium salt such as ammonium sulphate, hexamethylenediamine; synthesized hydrosilica and synthesized calcium silicate or aluminum silicate; natural and synthesized resin such as coumarone resin, polyvinyl chloride, the polymer of and copolymer of styrene ((co)polystyrene); and solid polycholoro phenol, asphaltum, paraffin, and solid fertilizer such as superphosphate.

Among the carriers of the composition of the present invention, at least one is a surfactant. The surfactant can be in a form of emulsifier, dispersant or humectant, and may be anionic or nonionic. Examples of suitable surfactants include: polyacrylic acid, sodium and calcium lignosulphonate; the polycondensation product of fatty acid or fatty amine containing no less than twelve carbon atoms in one molecule with ethylene oxide and/or propylene oxide. glycerine, 1-dodecanol, 1-tetradecyl alcohol, sorbitol, the fatty acid ester of sugar; and their polycondensation product with ethylene oxide and/or propylene oxide; the sulphate or sulphonate of their polycondensation product; the alkali or alkali earth salt of sulfate or sulfonate containing no less than ten carbon atoms in one molecule. Sodium salts are preferred. For instance, dodecyl sodium sulfate, secondary alkyl sodium sulfate, sodium sulforicinate, sodium alkarylsulfonate such as sodium dodecyl benzene sulfonate, the polymer of ethylene oxide, and the copolymer of ethylene oxide and propylene oxide.

Especially the following substances are usually used as emulsifier: nonionic emulsifier such as polyoxyethylene fatty acid ester, polyoxyethylene fatty alcohol ether, polyoxyethylene fatty amine. Specific samples are for instance ethoxylated castor oil, polyoxyethylene (n₂₀) phenethyl phenolic ether oleate, alkyl aryl polyoxyethylene polyoxypropylene ether, alkyl aryl formaldehyde resin polyoxyethylene ether, triphenylethylene phenol polyoxyethylene (n₂₀), ether phosphorylation triethanolamine salt, polycondensation product of bisphenethyl phenol polyoxyethylene ether (n₁₈) with formaldehyde, diphenyl phenol polyoxyethylene (n₁₈) polyoxypropylene ether(n₂₀) and so on; or market available emulsifier such as emulsifier 0201B, emulsifier 0203B, emulsifier 100^{#}, emulsifier 500^{#}, emulsifier 600^{#}, emulsifier 600-2^{#}, emulsifier 1601, emulsifier 2201, emulsifier NP-10, emulsifier NP-15, emulsifier 507^{#}, emulsifier OX-635, emulsifier OX-622, emulsifier OX-653, emulsifier OX-667, emulsifier CS-7 and emulsifier 36^{#}.

The following substances can be used as dispersants: sodium lignosulphonate, Nekal, calcium lignosulphonate, condensation product of methyl naphthalene sulfonic acid with formaldehyde, polycondensation product of naphthalene sulfonic acid with formaldehyde, sodium methylene naphthalene sulfonate, sodium oleic acid methylaminoethyl sulfonate, epoxy polyether, tert butyl ether, condensation product of dibutyl naphthalene sulfonic acid with formaldehyde, phosphate such as sodium hexametaphosphate, alkyl phenol polyoxyethylene phosphate, condensation products of alkyl phenol polyoxyethylene ether with formaldehyde sulfate, condensation products of N-methyl-acyl-sodium taurinate alkylphenol polyoxyethylene ether with formaldehyde, aralkyl phenol polyoxyethylene ether phosphate alkyl phenol polyoxyethylene ether, addition compound of castor oil with ethylene oxide, condensation product of block polymer of ethylene oxide and propylene oxide alkyl phenol polyoxyethylene ether with formaldehyde, alkyl phenol polyoxyethylene, polyoxypropylene ether and methyl cellulose.

The following substances can be used as humectants: sodium laurinol sulphate, alkyl alcohol polyoxyethylene ether sodium sulphate, capryl phenol polyoxyethylene ether sulphate, sulphate of condensation compounds of alkyl phenol polyoxyethylene ether with formaldehyde, sodium alkyl sulfonate, sodium dodecyl benzene sulfonate, sodium naphthalene sulfonate, alkyl succinic sulfonate, sodium laurinol polyoxyethylene ether sulfonate, sodium alkylamido taurinate, fatty alcohol polyoxyethylene ether, alkyl phenol polyoxyethylene ether, block polymer of polyoxyethylene and polyoxypropylene, sorbitan fatty acid ester polyoxyethylene ether and so on.

The thickener can be a synthesized one such as carboxymethyl alcohol, polyvinyl alcohol or polyvinyl acetate, or it can be natural water soluble polymer such as xanthan gum, gelatin, Arabic gum, polyethylene pyrrolidone, aluminum magnesium silicate, polyvinyl alcohol, polyethylene glycol, bakelite, shellac, carboxymethyl cellulose and sodium alginate and so on.

The defoamers are: glyceryl polyoxypropylene ether, silicones, C_{8~10} fatty alcohol, C_{10~20} saturated fatty acid and amide, and so on.

The oxidants are: potassium chlorate, sodium chlorate, potassium perchlorate, sodium nitrate, potassium nitrate, potassium permanganate, potassium bichromate.

The product of the present invention can be a readily-made formulation, that is to say all the substances were mixed in the composition. But the ingredients of the composition can also be provided as individual preparations, which mixed in bulk (can) prior to use. The concentrate of the present invention is usually mixed with water to afford the appropriate concentration of active ingredient.

Comparing with the existing herbicides in rape field, the composition of the present invention has the following characteristics:

### 1. Broad spectrum of weed control and high selectivity

Pyribambenz-propyl or Pyribambenz-isopropyl as active components is highly effective for controlling major weeds, especially in rape field. They can high-effectively control *Alopecurus aequalis, Alopecurus japonicus, Stellaria aquatica, Stallaria media* and *Atellaria alsine*. But the effectiveness of control is moderate for second important weeds in rape field such as *Poa annua, sclerochloa kengiana, Beckmannia syzigachne, Polypogon fugax* and broadleaf weeds such as *Cardlamine hirsuta, Galium aparine, Lapsana apogonoides, Hemistepta lyrata*. Quizalofop-ethyl has excellent control to most of grasses and even herbicide-resistant weeds of *sclerochloa kengiana* and *Beckmannia syzigachne*. However, it has the weak activity for the control of *Poa annua*. On the other side, ethametsulfuron as an active component has remarkable control towards most of broadleaf weeds, but rather moderate control for grass weeds. The present invention has integrated the characters and weed spectrum of each effective ingredients. We rationally combined above said components for different weed population in rape field nation widely and formulated combination preparations which can effectively control the injury of weeds in the whole period of development by being used once, in order to get the synergistic effect on weeds. For instance the combination preparations of Pyribambenz-propyl and quizalofop-ethyl can be used in the field where the major weeds are grass weeds and the secondary are broadleaf weeds. The combination preparations of Pyribambenz-propyl and ethametsulfuron can be used in the field where the major weeds are broadleaf weeds, and the secondary are grass weeds; the ternary preparations can be used in the field where the major weeds are both grass weeds and broadleaf weeds.

### 2. High safety to crops

All the effective ingredients selected in the present invention are high efficient or super high efficient, low toxic and environmental friendly herbicides. The combination preparations show good safety towards rape by large amount of trials and applications. By combination formulation, the dosage of long residual herbicide ethametsulfuron can be decreased, therefore has no adverse effect towards rotational crops; Thus, the herbicide preparations of the present invention have good safety to rotational crops.

### 3. No antagonistic effect

The screening and biological test of the herbicidal composition of the present invention showed that, the combination of any two or three effective ingredients, whether it is a binary or ternary preparation, exhibited herbicidal synergistic effect.

### 4. Persistent effect

The herbicidal composition of the present invention is applied in rape field once-and-for-all. It can effectively control injury of weeds in the whole period of crop development.

### 5. Rapid effect

7~10 days after using the herbicidal composition of the present invention, the injured weeds exhibit visual poisoned symptoms, especially when accelerating the releasing speed of Pyribambenz-propyl or Pyribambenz-isopropyl.

### 6. Reciprocal character

The potent releasing property of the effective ingredients of Pyribambenz-propyl and Pyribambenz-isopropyl of the present invention belong to low temperature category, while the quizalofop-ethyl is thermophilic, the combination of the two makes up the deficiency of quizalofop-ethyl.

Next the detailed description are given with reference to the examples. However, it is noted that the present invention is not limited to the range of the following examples. All '%' refers to weight percentage.

### (I) Formulation of emulsifiable concentrations (EC):

According to the following formulations, the solvent, technical product, and emulsifier are separately added and fully mixed. If necessary, the mixture was heated in a hot bath to be dissolved. Thereby, a transparent EC was obtained. The formulations are given as Examples 1~20.

### Example 1: 15% emulsifiable concentration formulation

10% Pyribambenz-propyl
5% quizalofop-ethyl
5% emulsifier 2013
5% emulsifier OX-622
10% dimethyl formamide
10% dimethyl sulfoxide
xylene to make up to 100%

### Example 2: 20% emulsifiable concentration formulation

10% Pyribambenz-propyl
10% quizalofop-ethyl
5% emulsifier 2013
5% emulsifier OX-622
10% dimethyl formamide
10% dimethyl sulfoxide
xylene to make up to 100%

### Example 3: 30% emulsifiable concentration formulation

24% Pyribambenz-propyl
6% quizalofop-ethyl
6% emulsifier 500^{#}
4% emulsifier 700^{#}
10% dimethyl formamide
10% dimethyl sulfoxide
xylene to make up to 100%

### Example 4: 30% emulsifiable concentration formulation

21 % Pyribambenz-propyl
9% quizalofop-ethyl
6% emulsifier 500^{#}
2% emulsifier 600^{#}
2% emulsifier 700^{#}
15% dimethyl formamide
xylene to make up to 100%

### Example 5: 30% emulsifiable concentration formulation

20% Pyribambenz-propyl
10% quizalofop-ethyl
5% emulsifier 2013
5% emulsifier OX-622
10% dimethyl formamide
10% dimethyl sulfoxide
xylene to make up to 100%

### Example 6: 30% emulsifiable concentration formulation

20% Pyribambenz-propyl
10% fluazifop-p-butyl
6% emulsifier 500^{#}
4% emulsifier 700^{#}
10% dimethyl formamide
10% dimethyl sulfoxide
xylene to make up to 100%

### Example 7: 30% emulsifiable concentration formulation

20% Pyribambenz-propyl
10% fluazifop-p-butyl
5% emulsifier 2013
5% emulsifier OX-622
10% dimethyl formamide
10% dimethyl sulfoxide
xylene to make up to 100%

### Example 8: 30% emulsifiable concentration formulation

20% Pyribambenz-propyl
10% fenoxaprop
6% emulsifier 500^{#}
4% emulsifier 700^{#}
10% dimethyl formamide
10% dimethyl sulfoxide
xylene to make up to 100%

### Example 9: 30% emulsifiable concentration formulation

20% Pyribambenz-propyl
10% sethoxydim
5% emulsifier 2013
5% emulsifier OX-622
10% dimethyl formamide
10% dimethyl sulfoxide
xylene to make up to 100%

### Example 10: 55% emulsifiable concentration formulation

5% Pyribambenz-propyl
50% acetochlor
6% emulsifier 500^{#}
4% emulsifier 700^{#}
10% dimethyl formamide
xylene to make up to 100%

### Example 11: 77% emulsifiable concentration formulation

7% Pyribambenz-propyl
70% acetochlor
6% emulsifier 500^{#}
4% emulsifier 700^{#}
10% dimethyl formamide
xylene to make up to 100%

### Example 12: 75% emulsifiable concentration formulation

5% Pyribambenz-propyl
70% acetochlor
6% emulsifier 500^{#}
4% emulsifier NP-10
10% dimethyl formamide
xylene to make up to 100%

### Example 13: 80% emulsifiable concentration formulation

5% Pyribambenz-propyl
75% acetochlor
5% emulsifier 2201
5% emulsifier OX-622
10% dimethyl sulfoxide
xylene to make up to 100%

### Example 14: 90% Emulsifiable concentration formulation

5% Pyribambenz-propyl
85% acetochlor
5% emulsifier 34^{#}
5% emulsifier 600-2^{#}
10% dimethyl sulfoxide
xylene to make up to 100%

### Example 15: 80% emulsifiable concentration formulation

5% Pyribambenz-propyl
75% metolachlor
5% emulsifier 2201
5% emulsifier OX-622
10% dimethyl sulfoxide
xylene to make up to 100%

### Example 16: 80% emulsifiable concentration formulation

5% Pyribambenz-propyl
75% alachlor
6% emulsifier 500^{#}
4% emulsifier NP-10
10% dimethyl sulfoxide
xylene to make up to 100%

### Example 17: 80% emulsifiable concentration formulation

5% Pyribambenz-propyl
75% napropamide
5% emulsifier 2201
5% emulsifier OX-622
10% dimethyl sulfoxide
xylene to make up to 100%

### Example18: 80% emulsifiable concentration formulation

5% Pyribambenz-propyl
75% ehaprochlor
6% emulsifier 500^{#}
4%NP-10
10% dimethyl sulfoxide
xylene to make up to 100%

### Example 19: 30% emulsifiable concentration formulation

5% Pyribambenz-propyl
25% benazolin
5% emulsifier 2201
5% emulsifier OX-622
10% dimethyl sulfoxide
xylene to make up to 100%

### Example 20: 60% emulsifiable concentration formulation

10% Pyribambenz-propyl
50% benazolin
5% emulsifier 2201
5% emulsifier OX-622
10% dimethyl sulfoxide
xylene to make up to 100%

### (II) Formulation of suspensions

According to the following formulations, using water as medium and adding technical product, dispersant, compatibility agent and antifreezing agent into a grinder, and then grinding the mixture to formulate a suspension. The formulations are given as examples 21~26.

### Example 21: 10% suspension formulation

8% Pyribambenz-propyl
2% ethametsulfuron
4% SOPA-270
3%NP-10
5% JFC
1.5% bentonite
5% glycerin
1.5% defoamer
water to make up to 100%

### Example 22: 15% suspension formulation

10% Pyribambenz-propyl
5% ethametsulfuron
5% NNO
0.3% white carbon black
5% ethylene glycol
1.5% defoamer
water to make up to 100%

### Example 23: 20% suspension formulation

15% Pyribambenz-propyl
5% ethametsulfuron
3% SOPA-270
2% emulsifier NP-10
2% emulsifier 33^{#}
1.5% bentonite
5% ethylene glycol
1.5% defoamer
water to make up to 100%

### Example 24: 25% suspension formulation

20% Pyribambenz-propyl
5% ethametsulfuron
4% Nekal
5% sodium lignosulphonate
5% carboxymethyl cellulose
5% ethylene glycol
1.5% defoamer
water to make up to 100%

### Example 25: 31% suspension formulation

25% Pyribambenz-propyl
6% ethametsulfuron
5% sodium lignosulphonate
0.3% white carbon black
5% ethylene glycol
1.5% defoamer
water to make up to 100%

### Example 26: 30% suspension formulation

5% Pyribambenz-propyl
25% benazolin
4% Nekal
5% sodium lignosulphonate
5% carboxymethyl cellulose
5% ethylene glycol
1.5% defoamer
water to make up to 100%

### (III) Formulation of suspo-emulsions (SEs)

According to the following formulations, water was used as medium and the technical product or original oil, dispersant, compatibility agent and antifreezing agent were added into a grinder. Then the mixture was grinded and formulated as SE. The formulations are given as examples 27~35.

### Example 27: 10% SE formulation

6% Pyribambenz-propyl
1.5% ethametsulfuron
2.5% quizalofop-ethyl
6% emulsifier 500^{#}
4% emulsifier 700^{#}
5% sodium lignosulphonate
5% carboxymethyl cellulose
10% dimethyl formamide
5% ethylene glycol
1.5% defoamer
water to make up to 100%

### Example 28: 15% SE formulation

10% Pyribambenz-propyl
2% ethametsulfuron
3% quizalofop-ethyl
3% SOPA-270
5% sodium lignosulphonate
1.5% bentonite
10% dimethyl sulfoxide
5% ethylene glycol
1.5% defoamer
water to make up to 100%

### Example 29: 20% SE formulation

12% Pyribambenz-propyl
3% ethametsulfuron
5% quizalofop-ethyl
6% emulsifier 500 ^{#}
4% emulsifier 700^{#}
5% NNO
5% carboxymethyl cellulose
10% dimethyl formamide
5% ethylene glycol
1.5% defoamer
water to make up to 100%

### Example 30: 20% SE formulation

12% Pyribambenz-propyl
3% ethametsulfuron
5% fenoxaprop
6% emulsifier 500^{#}
4% emulsifier 700^{#}
5% NO
5% carboxymethyl cellulose
10% dimethyl formamide
5% ethylene glycol
1.5% defoamer
water to make up to 100%

### Example 31: 20% SE formulation

12% Pyribambenz-propyl
3% ethametsulfuron
5% fluazifop-p-butyl
6% emulsifier 500^{#}
4% emulsifier 700^{#}
5% sodium lignosulphonate
5% carboxymethyl cellulose
10% dimethyl formamide
5% ethylene glycol
1.5% defoamer
water to make up to 100%

### Example 32: 25% SE formulation

17% Pyribambenz-propyl
3% ethametsulfuron
5% quizalofop-ethyl
2% NP-10
2% emulsifier 33^{#}
4% sodium dodecyl benzene sulfonate
5% carboxymethyl cellulose
5% ethylene glycol
1.5% defoamer
water to make up to 100%

### Example 33: 25% SE formulation

17% Pyribambenz-propyl
3% ethametsulfuron
5% haloxyfop
2% NP-10
2% emulsifier 33^{#}
4% sodium dodecyl benzene sulfonate
5% carboxymethyl cellulose
5% ethylene glycol
1.5% defoamer
water to make up to 100%

### Example 34: 33% SE formulation

20% Pyribambenz-propyl
5% ethametsulfuron
8% quizalofop-ethyl
6% emulsifier 500^{#}
4% emulsifier 700^{#}
5% sodium lignosulfonate
5% carboxymethyl cellulose
10% dimethyl formamide
5% ethylene glycol
1.5% defoamer
water to make up to 100%

### Example 35: 33% SE formulation

20% Pyribambenz-propyl
5% ethametsulfuron
8% sethoxydim
6% emulsifier 500^{#}
4% emulsifier 700^{#}
5% sodium lignosulfonate
5% carboxymethyl cellulose
10% dimethyl formamide
5% ethylene glycol
1.5% defoamer
water to make up to 100%

### (II) Formulation of emulsions-in-water

The technical products, solvent, emulsifier and co-emulsifier were fully mixed and dissolved to form a uniform oil phase. Water, antifreezing agent and so on were mixed together to form a uniform water phase. The water phase was added into the oil phase or the oil phase was added into the water phase with high speed stirring to formulate an emulsion-in-water with good dispersibility. The formulations are given as examples 36~ 50.

### Example 36: 10% emulsion-in-water formulation

8% Pyribambenz-propyl
2% quizalofop-ethyl
6% emulsifier 500^{#}
4% emulsifier 700^{#}
10% dimethyl formamide
10% dimethyl sulfoxide
5% ethylene glycol
0.8% polyvinyl alcohol
water to make up to 100%

### Example 37: 15% emulsion-in-water formulation

10% Pyribambenz-propyl
5% quizalofop-ethyl
5% emulsifier 2013
5% emulsifier OX-622
10% dimethyl formamide
10% dimethyl sulfoxide
5% ethylene glycol
0.8% polyvinyl alcohol
water to make up to 100%

### Example 38: 20% emulsion-in-water formulation

10% Pyribambenz-propyl
10% quizalofop-ethyl
5% emulsifier 2013
5% emulsifier OX-622
10% dimethyl formamide
5% propylene glycol
0.8% polyvinyl alcohol
water to make up to 100%

### Example 39: 30% emulsion-in-water formulation

20% Pyribambenz-propyl
10% quizalofop-ethyl
6% emulsifier 500^{#}
4% emulsifier 700^{#}
10% dimethyl formamide
10% dimethyl sulfoxide
5% ethylene glycol
0.8% polyvinyl alcohol
water to make up to 100%

### Example 41: 28% emulsion-in-water formulation

20% Pyribambenz-propyl
8% sethoxydim
5% emulsifier 2013
5% emulsifier OX-622
10% dimethyl formamide
5% propylene glycol
0.8% polyvinyl alcohol
water to make up to 100%

### Example 42: 30% emulsion-in-water formulation

20% Pyribambenz-propyl
10% fenoxaprop
6% emulsifier 500^{#}
4% emulsifier 700^{#}
10% dimethyl formamide
10% dimethyl sulfoxide
5% ethylene glycol
0.8% polyvinyl alcohol
water to make up to 100%

### Example 43: 30% emulsion-in-water formulation

20% Pyribambenz-propyl
10% haloxyfop
5% emulsifier 2013
5% emulsifier OX-622
10% dimethyl formamide
10% dimethyl sulfoxide
5% ethylene glycol
0.8% polyvinyl alcohol
water to make up to 100%

### Example 44: 30% emulsion-in-water formulation

20% Pyribambenz-propyl
10% fluazifop-p-butyl
6% emulsifier 500^{#}
4% emulsifier 700^{#}
10% dimethyl formamide
10% dimethyl sulfoxide
5% ethylene glycol
0.8% polyvinyl alcohol
water to make up to 100%

### Example 45: 75% emulsion-in-water formulation

5% Pyribambenz-propyl
70% acetochlor
6% emulsifier 500^{#}
4% emulsifier NP-10
10% dimethyl formamide
5% ethylene glycol
0.8% sorbitol
water to make up to 100%

### Example 46: 80% emulsion-in-water formulation

5% Pyribambenz-propyl
75% acetochlor
5% emulsifier 2201
5% emulsifier OX-622
10% dimethyl sulfoxide
5% propylene glycol
0.8% tetradecyl alcohol
water to make up to 100 %

### Example 47: 75% emulsion-in-water formulation

5% Pyribambenz-propyl
70% alachlor
6% emulsifier 500^{#}
4% emulsifier NP-10
10% dimethyl formamide
5% ethylene glycol
0.8% sorbitol
water to make up to 100 %

### Example 48: 75% emulsion-in-water formulation

5% Pyribambenz-propyl
70% metolachlor
6% emulsifier 500^{#}
4% emulsifier NP-10
10% dimethyl formamide
5% ethylene glycol
0.8% sorbitol
water to make up to 100 %

### Example 49: 80% emulsion-in-water formulation

5% Pyribambenz-propyl
75% napropamide
5% emulsifier 2201
5% emulsifier OX-622
10% dimethyl sulfoxide
5% propylene glycol
0.8% tetradecyl alcohol
water to make up to 100 %

### Example 50: 80% emulsion-in-water formulation

5% Pyribambenz-propyl
75% ehaprochlor
5% emulsifier 2201
5% emulsifier OX-622
10% dimethyl sulfoxide
5% propylene glycol
0.8% tetradecyl alcohol
water to make up to 100 %

The biological activities of above herbicidal compositions were tested with greenhouse pot experiments, by comparing their weeding activities between the combinations and between the combinations and single-pesticide formulation. The results show that, as compared with single-pesticide formulation, both the binary and the ternary herbicidal compositions of the present invention exhibited a higher activity of weed control, an increased weeding activity, a higher release speed of herbicidal effect, a broadened spectrum of weed control and a decreased cost of usage.

The formulations test of herbicidal composition was carried out according to the following methods.

The test soil is a formulated sandy loam soil. 9.5 centimeter diameter pots are used for herbicidal activity test.

The soil in the pot for the pre-emergence test was sprayed one day after planting. The preparation liquid for the treatment prepared by mixing individual single-herbicides was diluted with water to the desired dosage.

The pots for post-emergence treatment are placed into a greenhouse and incubated for 7 to 9 days, and then subjected to leave treatment by spraying. The preparation liquid for the treatment prepared by mixing individual single-herbicides was diluted with water to the desired dosage.

The treated pots stood for one day, then were placed in a greenhouse and watered regularly. The herbicidal activities of the compositions were evaluated by visual examination after incubating for 14 to 21 days..

The herbicidal activities of the compositions were evaluated by plant symptoms such as stunting, deformity, chlorosis, and whitening. 0 represents that the compositions have no herbicidal effect or have safety to crops. 100 represents that the weeds or crops were completely killed.

The evaluation criteria based on visual examination for weeding activity and crops safety are listed in the following table:

| Phytotoxicity (%) | Evaluation of activity on testing weeds by symptoms (suppression, deformity, whitening and etc.) | Evaluation of safety to crops (suppression, deformity, whitening and etc.) |
|---|---|---|
| 0 | Same as Control, no activity, eliminated | same as Control, tolerance, good |
| 10-20 | Very slight activity, eliminated | very slight, can be considered |
| 30-40 | slight or moderate activity, eliminated | slight, visual injury, eliminated |
| 50-60 | moderate but insufficient activity, can be considered for further improvement | more susceptible, heavy injury, eliminated |
| 70-80 | Susceptible, can be considered | very susceptible, heavy injury, eliminated |
| 90-100 | very susceptible, good | very susceptible, heavy injury, eliminated |

The plant species for biological activity tests are listed in the following table

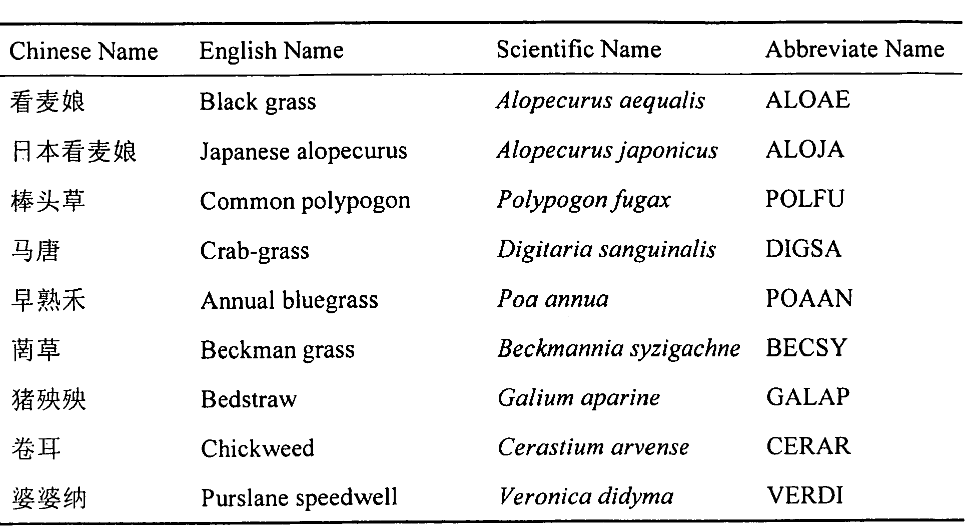

The weeding activity results of Pyribambenz-propyl and quizalofop-ethyl combinations in different ratios show in table 1.

The weeding activity results of Pyribambenz-isopropyl and quizalofop-ethyl combinations in different ratios show in table 2.

The pre-emergence weeding activity results of Pyribambenz-propyl and ethametsulfuron combinations in different ratios show in table 3.

The post-emergence weeding activity results of Pyribambenz-isopropyl and ethametsulfuron combinations in different ratios show in table 4.

The post-emergence early stage weeding activity results of Pyribambenz-propyl and acetochlor combinations in different ratios show in table 5.

The post-emergence early stage weeding activity results of Pyribambenz-isopropyl and acetochlor combinations in different ratios show in table 6.

The post-emergence early stage weeding activity results of Pyribambenz-propyl, ethametsulfuron and quizalofop-ethyl combinations in different ratios show in table 7.

The post-emergence early stage weeding activity results of Pyribambenz-isopropyl, ethametsulfuron and quizalofop-ethyl combinations in different ratios show in table 8.

The post-emergence early stage weeding activity results of Pyribambenz-propyl and benazolin combinations in different ratios show in table 9.

The post-emergence early stage weeding activity results of Pyribambenz-isopropyl and benazolin combinations in different ratios show in table 10.

**Table 1 The visual evaluation of weed effects for the compounds of Pyribambenz-propyl and quizalofop-ethyl in different ratios (%)**

| Treatment (active ingredients g/ha) | | ALOAE | | DIGSA | POLFU | POAAN | BECSY |
|---|---|---|---|---|---|---|---|
| Pyribambenz-propyl | quizalofop-ethyl | 0 leaf | 3 leaves | 3 leaves | 3-4 leaves | 3 leaves | 2 leaves |
| 30 | - | 90 | 100 | 60 | 70 | 20 | 0 |
| 45 | - | 90 | 100 | 80 | 80 | 30 | 0 |
| - | 6 | 85 | 98 | 100 | 30 | 0 | 95 |
| - | 9 | 85 | 100 | 100 | 100 | 10 | 95 |
| - | 12 | 85 | 100 | 100 | 100 | 10 | 98 |
| - | 15 | 85 | 100 | 100 | 100 | 10 | 98 |
| 30 | 6 | 95 | 100 | 100 | 50 | 60 | 100 |
| 30 | 9 | 95 | 100 | 100 | 50 | 60 | 100 |
| 30 | 12 | 95 | 100 | 100 | 50 | 60 | 100 |
| 30 | 15 | 100 | 100 | 100 | 50 | 95 | 100 |
| 45 | 6 | 95 | 100 | 100 | 70 | 90 | 100 |
| 45 | 9 | 95 | 100 | 100 | 70 | 90 | 100 |
| 45 | 12 | 100 | 100 | 100 | 70 | 90 | 100 |
| 45 | 15 | 100 | 100 | 100 | 70 | 95 | 100 |

**Table 2 The visual evaluation of weed effects for the compounds of Pyribambenz-isopropyl and quizalofop-ethyl in different ratios (%)**

| Treatment (active ingredients g/ha) | | ALOAE | | DIGSA | POLFU | POAAN | BECSY |
|---|---|---|---|---|---|---|---|
| Pyribambenz-isopropyl | Quizalofop-ethyl | 0 leaf | 3 leaves | 3 leaves | 3-4 leaves | 3 leaves | 2 leaves |
| 30 | - | 90 | 100 | 60 | 80 | 60 | 30 |
| 45 | - | 90 | 100 | 80 | 80 | 90 | 30 |
| - | 6 | 85 | 98 | 100 | 30 | 0 | 95 |
| - | 9 | 85 | 100 | 100 | 100 | 10 | 95 |
| - | 12 | 85 | 100 | 100 | 100 | 10 | 98 |
| - | 15 | 85 | 100 | 100 | 100 | 10 | 98 |
| 30 | 6 | 95 | 100 | 100 | 70 | 95 | 98 |
| 30 | 9 | 95 | 100 | 100 | 70 | 95 | 100 |
| 30 | 12 | 95 | 100 | 100 | 70 | 100 | 100 |
| 30 | 15 | 100 | 100 | 100 | 70 | 95 | 100 |
| 45 | 6 | 95 | 100 | 100 | 70 | 100 | 100 |
| 45 | 9 | 95 | 100 | 100 | 70 | 100 | 100 |
| 45 | 12 | 100 | 100 | 100 | 70 | 100 | 100 |
| 45 | 15 | 100 | 100 | 100 | 70 | 100 | 100 |

**Table 3 The visual evaluation of weed effects of the compounds of Pyribambenz-propyl and ethametsulfuron in different ratios for pre-emergency treatment (%)**

| Treatment (active ingredients g/ha) | | POLFU | ALOAE | GALAP | CERAR |
|---|---|---|---|---|---|
| Pyribambenz-propyl | ethametsulfuron | | | | |
| 30 | - | 60 | 95 | 0 | 70 |
| 45 | - | 80 | 95 | 40 | 80 |
| - | 6 | 60 | 80 | 10 | 85 |
| - | 7.5 | 70 | 90 | 40 | 90 |
| - | 9 | 75 | 95 | 70 | 95 |
| 30 | 6 | 85 | 95 | 70 | 95 |
| 30 | 7.5 | 85 | 95 | 80 | 95 |
| 30 | 9 | 85 | 95 | 85 | 95 |
| 45 | 6 | 85 | 98 | 70 | 95 |
| 45 | 7.5 | 85 | 98 | 90 | 95 |
| 45 | 9 | 85 | 98 | 70 | 95 |

**Table 4 The visual evaluation of weed effects of the compounds of Pyribambenz-isopropyl and ethametsulfuron in different ratio for post-emergence treatment (%)**

| Treatment (active ingredients g/ha) | | POLFU 4~4.5 leaves | ALOAE 3 leaves | GALAP 7~8 leaves | CERAR 6 leaves |
|---|---|---|---|---|---|
| Pyribambenz-isopropyl | ethametsulfuron | | | | |
| 30 | - | 50 | 80 | 0 | 50 |
| 45 | - | 60 | 90 | 0 | 60 |
| - | 6 | 60 | 90 | 85 | 90 |
| - | 7.5 | 60 | 90 | 90 | 90 |
| - | 9 | 70 | 90 | 90 | 90 |
| 30 | 6 | 70 | 95 | 95 | 90 |
| 30 | 7.5 | 70 | 90 | 95 | 85 |
| 30 | 9 | 75 | 90 | 95 | 95 |
| 45 | 6 | 70 | 90 | 98 | 98 |
| 45 | 7.5 | 70 | 90 | 95 | 95 |
| 45 | 9 | 70 | 90 | 95 | 95 |

**Table 5 The visual evaluation of weed effects of the compounds of Pyribambenz-propyl and acetochlor in different ratios for post-emergence early stage treatment (%)**

| Treatment (active ingredients g/ha) | | POAAN | ALOJA | GALAP | CERAR |
|---|---|---|---|---|---|
| Pyribambenz-propyl | acetochlor | | | | |
| 30 | - | 95 | 90 | 20 | 80 |
| 45 | - | 98 | 90 | 20 | 85 |
| - | 150 | 70 | 60 | 40 | 70 |
| - | 300 | 90 | 90 | 50 | 85 |
| - | 450 | 95 | 95 | 60 | 85 |
| - | 600 | 95 | 95 | 70 | 85 |
| 30 | 150 | 100 | 98 | 40 | 90 |
| 30 | 300 | 100 | 100 | 60 | 90 |
| 30 | 450 | 100 | 100 | 70 | 90 |
| 30 | 600 | 100 | 100 | 70 | 90 |
| 45 | 150 | 100 | 100 | 60 | 90 |
| 45 | 300 | 100 | 100 | 70 | 95 |
| 45 | 450 | 100 | 100 | 70 | 95 |
| 45 | 600 | 100 | 100 | 80 | 95 |

**Table 6 The visual evaluation of weed effects of the compounds of Pyribambenz-isopropyl and acetochlor in different ratios for post-emergence early stage treatment (%)**

| Treatment (active ingredients g/ha) | | POAAN | ALOJA | GALAP | CERAR |
|---|---|---|---|---|---|
| Pyribambenz-isopropyl | acetochlor | | | | |
| 30 | - | 95 | 90 | 30 | 80 |
| 45 | - | 98 | 90 | 50 | 90 |
| - | 150 | 70 | 60 | 40 | 70 |
| - | 300 | 90 | 90 | 50 | 85 |
| - | 450 | 95 | 95 | 60 | 85 |
| - | 600 | 95 | 95 | 70 | 85 |
| 30 | 150 | 100 | 100 | 50 | 90 |
| 30 | 300 | 100 | 100 | 50 | 95 |
| 30 | 450 | 100 | 100 | 70 | 95 |
| 30 | 600 | 100 | 100 | 70 | 98 |
| 45 | 150 | 100 | 100 | 50 | 95 |
| 45 | 300 | 100 | 100 | 50 | 98 |
| 45 | 450 | 100 | 100 | 70 | 98 |
| 45 | 600 | 100 | 100 | 80 | 98 |

**Table 7 The visual evaluation of weed effects of the compounds of Pyribambenz-propyl, ethametsulfuron and quizalofop-ethyl in different ratios shows for post-emergence early stage treatment (%)**

| Treatment (active ingredients g/ha) | | | GALAP | CERAR | POAAN | BECSY |
|---|---|---|---|---|---|---|
| Pyribambenz-propyl | ethametsulfuron | quizalofop-ethyl | 7~8 leaves | 3~4 leaves | 2~3 leaves | 2~3 leaves |
| 30 | - | - | 0 | 40 | 85 | 50 |
| 45 | - | - | 30 | 50 | 95 | 70 |
| - | 6 | - | 90 | 90 | 70 | 40 |
| - | 9 | - | 90 | 90 | 80 | 40 |
| - | - | 6 | 0 | 0 | 0 | 98 |
| - | - | 9 | 0 | 0 | 0 | 100 |
| - | - | 12 | 0 | 0 | 50 | 100 |
| - | - | 15 | 0 | 0 | 60 | 100 |
| 30 | 6 | 6 | 95 | 100 | 98 | 98 |
| 30 | 6 | 9 | 95 | 100 | 98 | 98 |
| 30 | 6 | 12 | 95 | 100 | 98 | 98 |
| 30 | 6 | 15 | 95 | 100 | 98 | 98 |
| 30 | 9 | 6 | 95 | 100 | 98 | 98 |
| 30 | 9 | 9 | 98 | 100 | 98 | 98 |
| 30 | 9 | 12 | 98 | 100 | 98 | 98 |
| 30 | 9 | 15 | 98 | 100 | 98 | 98 |
| 45 | 6 | 6 | 95 | 100 | 98 | 98 |
| 45 | 6 | 9 | 95 | 100 | 98 | 98 |
| 45 | 6 | 12 | 95 | 100 | 98 | 98 |
| 45 | 6 | 15 | 95 | 100 | 98 | 98 |
| 45 | 9 | 6 | 95 | 100 | 98 | 98 |
| 45 | 9 | 9 | 95 | 100 | 98 | 98 |
| 45 | 9 | 12 | 95 | 100 | 98 | 98 |
| 45 | 9 | 15 | 95 | 100 | 98 | 98 |

**Table 8 The visual evaluation of weed effects of the compounds of Pyribambenz-isopropyl, ethametsulfuron and quizalofop-ethyl in different ratios for post-emergence early stage treatment (%)**

| Treatment (active ingredients g/ha) | | | GALAP | CERAR | POAAN | BECSY |
|---|---|---|---|---|---|---|
| Pyribambenz-isopropyl | ethametsulfuron | quizalofop-ethyl | 7~8 leaves | 3~4 leaves | 2~3 leaves | 2~3 leaves |
| 30 | - | - | 0 | 40 | 80 | 50 |
| 45 | - | - | 10 | 60 | 95 | 70 |
| - | 6 | - | 90 | 90 | 70 | 40 |
| - | 9 | - | 90 | 90 | 80 | 40 |
| - | - | 6 | 0 | 0 | 0 | 98 |
| - | - | 9 | 0 | 0 | 0 | 100 |
| - | - | 12 | 0 | 0 | 50 | 100 |
| - | - | 15 | 0 | 0 | 60 | 100 |
| 30 | 6 | 6 | 100 | 95 | 98 | 98 |
| 30 | 6 | 9 | 100 | 98 | 98 | 98 |
| 30 | 6 | 12 | 100 | 98 | 98 | 98 |
| 30 | 6 | 15 | 100 | 98 | 98 | 98 |
| 30 | 9 | 6 | 100 | 98 | 98 | 98 |
| 30 | 9 | 9 | 100 | 98 | 98 | 98 |
| 30 | 9 | 12 | 100 | 98 | 98 | 98 |
| 30 | 9 | 15 | 100 | 98 | 98 | 98 |
| 45 | 6 | 6 | 100 | 95 | 98 | 90 |
| 45 | 6 | 9 | 100 | 95 | 98 | 95 |
| 45 | 6 | 12 | 100 | 98 | 98 | 98 |
| 45 | 6 | 15 | 100 | 98 | 98 | 98 |
| 45 | 9 | 6 | 100 | 98 | 98 | 98 |
| 45 | 9 | 9 | 100 | 98 | 98 | 98 |
| 45 | 9 | 12 | 100 | 98 | 98 | 98 |
| 45 | 9 | 15 | 100 | 98 | 98 | 98 |

**Table 9 The visual evaluation of weed effects of Pyribambenz-propyl and benazolin in different ratios for post-emergence treatment (%)**

| Treatment (active ingredients g/ha) | | POAAN | ALOJA | GALAP | VERDI |
|---|---|---|---|---|---|
| Pyribambenz-propyl | benazolin | | | | |
| 30 | -- | 85 | 85 | 20 | 20 |
| 45 | -- | 90 | 90 | 20 | 30 |
| -- | 75 | 0 | 0 | 70 | 60 |
| -- | 150 | 0 | 0 | 90 | 90 |
| -- | 225 | 0 | 0 | 100 | 98 |
| -- | 300 | 0 | 0 | 100 | 100 |
| 30 | 75 | 85 | 85 | 70 | 60 |
| 30 | 150 | 85 | 85 | 90 | 90 |
| 30 | 225 | 85 | 85 | 100 | 98 |
| 30 | 300 | 85 | 85 | 100 | 100 |
| 45 | 75 | 90 | 90 | 80 | 70 |
| 45 | 150 | 90 | 90 | 98 | 98 |
| 45 | 225 | 90 | 90 | 100 | 100 |
| 45 | 300 | 90 | 90 | 100 | 100 |

**Table 10 The visual evaluation of weed effects of Pyribambenz-isopropyl and benazolin in different ratios for post-emergence treatment (%)**

| Treatment (active ingredients g/ha) | | | | | |
|---|---|---|---|---|---|
| Pyribambenz-isopropyl | benazolin | POAAN | ALOJA | GALAP | VERDI |
| 30 | -- | 85 | 85 | 20 | 20 |
| 45 | -- | 90 | 90 | 20 | 30 |
| -- | 75 | 0 | 0 | 70 | 60 |
| -- | 150 | 0 | 0 | 90 | 90 |
| -- | 225 | 0 | 0 | 100 | 98 |
| -- | 300 | 0 | 0 | 100 | 100 |
| 30 | 75 | 85 | 85 | 70 | 60 |
| 30 | 150 | 85 | 85 | 90 | 90 |
| 30 | 225 | 85 | 85 | 100 | 98 |
| 30 | 300 | 85 | 85 | 100 | 100 |
| 45 | 75 | 90 | 90 | 80 | 80 |
| 45 | 150 | 90 | 90 | 98 | 98 |
| 45 | 225 | 90 | 90 | 100 | 100 |
| 45 | 300 | 90 | 90 | 100 | 100 |

### Test treatment:

A. 10% emulsifiable concentrate (efficient ingredients are Pyribambenz-propyl and quizalofop-ethyl at a mass ratio of 1:0.2), 30 ml per Chinese acre, 40ml per Chinese acre;
B. 10% suspension(efficient ingredients are Pyribambenz-propyl and ethametsulfuron at a mass ratio of 1:0.2), 30 gram per Chinese acre, 40 gram per Chinese acre;
C. 10% suspo-emulsion (efficient ingredients are Pyribambenz-propyl, quizalofop-ethyl, and ethametsulfuron at a mass ratio of 1:0.3:0.2), 30 gram per Chinese acre, 40gram per Chinese acre;
D. 75% emulsifiable concentrate (efficient ingredients are Pyribambenz-propyl and acetochlor at a mass ratio of 1:15), 40 ml per Chinese acre, 50 ml per Chinese acre;
E. 30% emulsifiable concentrate (efficient ingredients are Pyribambenz-propyl and benazolin at a mass percent of 1:5), 50ml per Chinese acre, 60ml per Chinese acre;
F. 90% acetochlor emulsifiable concentrate: 30ml per Chinese acre, 40ml per Chinese acre;
G. 5% ethametsulfuron wettable power: 20 gram per Chinese acre, 15 gram per Chinese acre;
H. 5% quizalofop-ethyl emulsifiable concentrate: 10ml per Chinese acre, 15ml per Chinese acre;
I. Pyribambenz-propyl 10% emulsifiable concentrate: 25ml per Chinese acre, 35ml per Chinese acre;
J. 30% benazolin emulsifiable concentrate: 40ml per Chinese acre, 50ml per Chinese acre;
K. blank for comparison (control): CK

The results show that all four herbicidal compositions have high activity of weed control. Comparing with single herbicide, the composition shows a broadened spectrum of weed control and increased herbicidal activity.

The pot experiment results of preparations of the composition on testing weeds in a greenhouse are shown in table 11.

**Table 11: The weed effects of the compositions for post-emergence**

| Composition | Dosage per Chinese acre | ALOAE | POLFU | POAAN | BECSY | GALAP | CERAR |
|---|---|---|---|---|---|---|---|
| A | 30 ml | 95 | 98 | 95 | 98 | 50 | 55 |
| | 40 ml | 98 | 98 | 95 | 98 | 55 | 60 |
| B | 30 gram | 95 | 95 | 90 | 50 | 95 | 95 |
| | 40 gram | 95 | 90 | 95 | 55 | 98 | 95 |
| C | 30 gram | 98 | 98 | 95 | 90 | 95 | 98 |
| | 40 gram | 98 | 98 | 98 | 95 | 95 | 98 |
| D | 40 ml | 95 | 95 | 95 | 90 | 70 | 75 |
| | 50 ml | 98 | 98 | 98 | 95 | 75 | 85 |
| E | 50 ml | 90 | 80 | 85 | 50 | 100 | 100 |
| | 60 ml | 98 | 85 | 90 | 65 | 100 | 100 |
| F | 30 ml | 80 | 80 | 80 | 75 | 70 | 75 |
| | 40 ml | 85 | 85 | 85 | 80 | 75 | 80 |
| G | 15 gram | 80 | 80 | 75 | 50 | 90 | 95 |
| | 20 gram | 85 | 85 | 80 | 60 | 95 | 98 |
| H | 15 ml | 90 | 95 | 95 | 85 | 40 | 45 |
| | 20 ml | 95 | 95 | 90 | 90 | 50 | 50 |
| I | 25 ml | 95 | 80 | 85 | 50 | 50 | 50 |
| | 35 ml | 100 | 85 | 90 | 65 | 60 | 55 |
| J | 40 ml | 0 | 0 | 0 | 0 | 95 | 95 |
| | 50 ml | 0 | 0 | 0 | 0 | 100 | 100 |

As apparent from the results, the compositions of the present invention do not simply behave the total herbicidal activity of pyrimidinyl benzylamine herbicides and other conventional herbicides stated above, rather have a strong synergistic herbicidal activity. Moreover, the composition can prevent certain weeds completely and selectively in a low dosage, and are safe to objective crops.

## Claims

1. A herbicidal composition, comprising, as active ingredient, a pyrimidinyl benzylamine herbicide and at least one herbicide selected from a group consisting of acetyl-CoA carboxylase (ACCase) inhibitors, chloroamide herbicides, ethametsulfuron, and benazolin,
said pyrimidinyl benzylamine herbicide is Pyribambenz-propyl or Pyribambenz-isopropyl with the following structures.

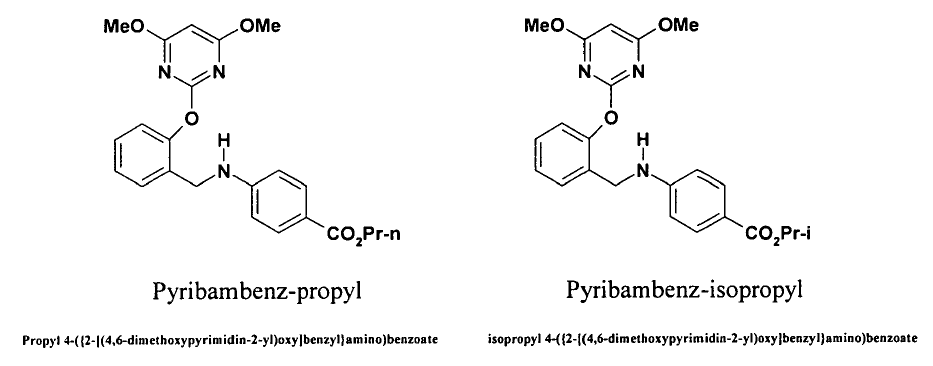

2. The composition according to Claim 1, wherein the pyrimidinyl benzylamine herbicide and one or two herbicide(s) selected from the group consisting of acetyl-CoA carboxylase inhibitors, chloroamide herbicides, ethametsulfuron and benazolin are used together as the active ingredient.

3. The composition according to Claim 1, wherein said acetyl-CoA carboxylase inhibitor is selected from a group consisting of quizalofop-ethyl, fluazifop-p-butyl, haloxyfop, fenoxaprop, and sethoxydim, and said chloroamide herbicide is selected from a group consisting of acetochlor, alachlor, napropamide, ehaprochlor, and metolachlor.

4. The composition according to Claim 1 or 3, comprising 5% ~ 95% by weight of the pyrimidinyl benzylamine herbicide and at least one herbicide selected from a group consisting of acetyl-CoA carboxylase inhibitors, chloroamide herbicides, ethametsulfuron, and benazolin the as the active ingredient based on the weight of the composition, and a balance of acceptable herbicide carriers.

5. The composition according to Claim 1 or 3, comprising 10% ~ 90% by weight of the pyrimidinyl benzylamine herbicide and at least one herbicide selected from a group consisting of acetyl-CoA carboxylase inhibitors, chloroamide herbicides, ethametsulfuron, and benazolinthe as the active ingredient based on the weight of the composition, and a balance of acceptable herbicide carriers.

6. The composition according to Claim 1, wherein the ratio of the pyrimidinyl benzylamine herbicide to the ACCase inhibitor is 1:0.01 ~10.0 by the weight of the active ingredient; the ratio of the pyrimidinyl benzylamine herbicide to ethametsulfuron is 1:0.01~10.0 by the weight of the active ingredient; the ratio of the pyrimidinyl benzylamine herbicide to benazolin is 1:1~20 by the weight of the active ingredient; and the ratio of the pyrimidinyl benzylamine herbicide to the chloroamide herbicide is 1:1~40 by the weight of the active ingredient.

7. The composition according to Claim 1, wherein the active ingredient is in a form of ternary formulation, the ratios of three herbicides as effective components are as follows: the pyrimidinyl benzylamine herbicide to ACCase inhibitor to ethametsulfuron is 1:0.01 ~ 10.0:0.01~10.0 based on the weight of the active ingredient; the pyrimidinyl benzylamine herbicide to ACCase inhibitor to benazolin is 1:0.01 ~ 10.0:1.0~20.0 based on the weight of the active ingredient; and the pyrimidinyl benzylamine herbicide to chloroamide herbicide to benazolin is 1:1.0~40.0:1.0~20.0 based on the weight of the active ingredient.

8. The composition according to Claim 1, wherein, the ratio of pyrimidinyl benzylamine herbicide to ACCase inhibitor is 1:0.01~5.0 based on the weight of the active ingredient, the ratio of pyrimidinyl benzylamine herbicide to ethametsulfuron is 1:0.01~5.0 based on the weight of the active ingredient, the ratio of pyrimidinyl benzylamine herbicide to benazolin is 1:1~10 based on the weight of the active ingredient, the ratio of pyrimidinyl benzylamine herbicide to chloroamide herbicide is 1:1~20 based on the weight of the active ingredient; and
in the case that the active ingredient is in a form of ternary formulation, the ratio of pyrimidinyl benzylamine herbicide to ACCase inhibitor to ethametsulfuron is 1 : 0.01~5.0 : 0.01~5.0 based on the weight of the active ingredient, the ratio of pyrimidinyl benzylamine herbicide to ACCase inhibitor to benazolin is 1: 0.01~5.0: 1.0 ~10.0 based on the weight of the active ingredient, and the ratio of pyrimidinyl benzylamine to chloroamide herbicide to benazolin is 1:1.0~20.0:1.0~10.0 based on the weight of the active ingredient.

9. The composition according to Claim 1, wherein, the ratio of pyrimidinyl benzylamine herbicides to ACCase inhibitors is 1:0.1~2.0 based on the weight of the active ingredient, the ratio of pyrimidinyl benzylamine herbicides to ethametsulfuron is 1: 0.1~0.5 based on the weight of the active ingredient, the ratio of pyrimidinyl benzylamine herbicides to benazolin is 1:5~10 based on the weight of the active ingredient, the ratio of pyrimidinyl benzylamine herbicides to chloroamide herbicides is 1:5~20 based on the weight of the active ingredient; and
in the case that the active ingredient is in a form of ternary formulation, the ratio of pyrimidinyl benzylamine herbicides to ACCase inhibitors to ethametsulfuron is 1:0.1~2.0:0.1~0.5 based on the weight of the active ingredient, the ratio of pyrimidinyl benzylamine herbicides to ACCase inhibitors to benazolin is 1 : 0.01~10.0 : 5.0~10.0 based on the weight of the active ingredient, and the ratio of pyrimidinyl benzylamine herbicides to chloroamide herbicides to benazolin is 1: 5.0~20.0: 5.0~10.0 based on the weight of the active ingredient.

10. The composition according to Claim 1, wherein the composition comprises at least two carriers, and one of which is a surfactant.

11. The composition according to Claim 1, wherein the composition is formulated into liquors, emulsions, suspensions, aqueous suspension concentrate, micro-emulsion, emulsion, powder preparations, wettable powder, water soluble powder, granule or capsules.

12. A process of weed control, comprising a step of employing the composition of Claim 1 as a chemical herbicide in effective dosage to control weeds.

13. The process according to Claim 11, comprising a step of employing the composition of Claim 1 in rape field in effective dosage to control grass weeds and broadleaf weeds.
